Europäisches Patentamt

European Patent Office

Office européen des brevets

(11) Veröffentlichungsnummer : **0 577 653 B1**

(12) **EUROPÄISCHE PATENTSCHRIFT**

(45) Veröffentlichungstag der Patentschrift :
**01.02.95 Patentblatt 95/05**

(21) Anmeldenummer : **92906943.3**

(22) Anmeldetag : **19.03.92**

(86) Internationale Anmeldenummer :
**PCT/DE92/00239**

(87) Internationale Veröffentlichungsnummer :
**WO 92/17949 15.10.92 Gazette 92/26**

(51) Int. Cl.⁶ : **H04B 3/46,** G01R 27/28

(54) **VERFAHREN ZUM ERMITTELN DER ÜBERTRAGUNGSEIGENSCHAFTEN EINER ELEKTRISCHEN LEITUNG.**

(30) Priorität : **27.03.91 DE 4110439**

(43) Veröffentlichungstag der Anmeldung :
**12.01.94 Patentblatt 94/02**

(45) Bekanntmachung des Hinweises auf die
Patenterteilung :
**01.02.95 Patentblatt 95/05**

(84) Benannte Vertragsstaaten :
**AT BE CH DE DK ES FR GB GR IT LI NL SE**

(56) Entgegenhaltungen :
**DE-A- 2 637 775**
**DE-C- 2 849 119**
**GB-A- 1 160 271**

(73) Patentinhaber : **SIEMENS**
**AKTIENGESELLSCHAFT**
**Wittelsbacherplatz 2**
**D-80333 München (DE)**

(72) Erfinder : **ARWEILER, Hans, Werner**
**Fregestr. 42**
**D-1000 Berlin 41 (DE)**
Erfinder : **WOLF, Andreas**
**Menzelstr. 23**
**D-1000 Berlin 41 (DE)**

EP 0 577 653 B1

**Beschreibung**

Die Erfindung bezieht sich auf ein Verfahren zum Ermitteln der Übertragungseigenschaften einer elektrischen Leitung in einem ISDN-System, bei dem

a) die Leitung an einem Ende mit einem Probesignal beaufschlagt wird und

b) am anderen Ende der Leitung das aufgrund des Probesignals entstandene Empfangssignal ausgewertet wird, indem es während eines der Periode des Probesignals entsprechenden Zeitintervalls abgetastet und einer Fouriertransformation unter Gewinnung eines Spektralsignals unterworfen wird.

Bei einem bekannten Verfahren dieser Art (DE 28 49 119 C2) wird als Probesignal ein Testimpuls verwendet, der aus der Überlagerung einer Reihe harmonischer Schwingungen hergeleitet wird. Dabei werden die Amplitudenwerte und die Phasenlagen der einzelnen Frequenzkomponenten mittels eines Speichers in einem Meßsender im Hinblick auf einen niedrigen Crest-Faktor gewählt. Bei geschickter Wahl ist ein Testimpuls mit einem Crest-Faktor von 4,03 erreichbar. Der durch das Meßobjekt veränderte Testimpuls wird als Empfangssignal während einer Periode abgetastet; die Abtastwerte werden in digitaler Form abgespeichert. Anschließend erfolgt eine Fast-Fourier-Transformation, mittels der für jede Harmonische des Testimpulses die Amplitude und Phase errechenbar ist. Mit den entsprechenden gespeicherten Größen des unverfälschten Testimpulses lassen sich dann die Dämpfung bzw. die Dämpfungsverzerrung des Meßobjektes bestimmen.

Der Erfindung liegt die Aufgabe zugrunde, ein Verfahren zum Bestimmen der Übertragungseigenschaften einer elektrischen Leitung in einem ISDN-System anzugeben, das sich hinsichtlich der Erzeugung des Probesignals und hinsichtlich der Auswertung des Empfangssignals mit vergleichsweise geringem Aufwand durchführen läßt und das mit einem Probesignal mit dem Crest-faktor Eins arbeitet. Zum Bestimmen der Übertragungseigenschaften von elektrischen Leitungen in einem ISDN (Integrated Services Digital Network)-System besteht nämlich die Forderung, daß mit einem Probesignal mit möglichst dem Crestfaktor Eins gearbeitet wird.

Zur Lösung der angegebenen Aufgabe ist bei dem eingangs angegegebenen Verfahren erfindungsgemäß vorgesehen, daß

c) zum Ermitteln der Übertragungseigenschaften einer elektrischen Leitung in einem ISDN-System als Probesignal ein binäres, bipolares Zufallszahlenfolgesignal mit dem Crestfaktor Eins verwendet wird, und daß

d) das Spektralsignal mit einem Referenzspektrum unter Gewinnung eines Ausgangssignals komplex multipliziert wird, das ein Maß für die Übertragungseigenschaften der Leitung darstellt, wobei das Referenzspektrum aus dem zeitinversen Probesignal gewonnen ist.

Ein Vorteil des erfindungsgemäßen Verfahrens besteht in der Verwendung eines binären, bipolaren Zufallszahlenfolgesignals, weil ein solches Signal den Crestfaktor Eins besitzt und sich z. B. mit rückgekoppelten Schieberegistern ohne weiteres erzeugen läßt. Außerdem ist ein solches Signal in seinen Parametern leicht stationär zu halten. Ein weiterer Vorteil des erfindungsgemäßen Verfahrens besteht darin, daß seine Realisierung im Bildbereich der Fourier-Transformation erfolgt, in dem sich die mathematische Faltungsoperation durch die relativ einfach durchzuführende Multiplikation zweier Spektren verwirklichen läßt.

Es ist zwar aus der GB-PS 1 160 271 ein Verfahren zum Ermitteln einer Impulsantwort eines elektrischen Systems bekannt, bei dem als Probesignal ein binäres, bipolares Zufallszahlenfolgesignal mit einem Crestfaktor Eins verwendet wird, jedoch handelt es sich dabei bei dem elektrischen System um ein Servosystem, und es wird das Probesignal nach Durchlaufen des Servosystems mit jeweils durch unterschiedlich lange Verzögerung aus dem Probesignal gewonnenen, verzögerten Zufallszahlenfolgesignalen kreuzkorreliert.

Ferner ist es in der digitalen Meßsignalverarbeitung grundsätzlich bekannt (vgl. z.B. "Technisches Messen tm", 54. Jahrgang, Heft 1/1987, Seiten 20 bis 25 sowie Heft 2/1987, Seiten 66 bis 74, "IEEE Transactions on Instrumentation and Measurement" Vol. IM- 32, No. 3, September 1983, Seiten 447 bis 450 und H. Kaden "Impulse und Schaltvorgänge in der Nachrichtentechnik" 1957, Seiten 261 bis 269), ein Signal während eines der Periode eines anderen Signals entsprechenden Zeitintervalls abzutasten und einer Fouriertransformation unter Gewinnung eines Spektralsignals zu unterwerfen, jedoch enthalten diese Literaturstellen keinerlei Hinweise auf die Verwendung eines binären, bipolaren Zufallszahlenfolgesignals mit dem Crestfaktor Eins und eine komplexe Multiplikation des gewonnenen Spektralsignals mit einem aus dem zeitinversen Probesignal gebildeten Referenzspektrum, um die Übertragungseigenschaften von elektrischen Leitungen in einem ISDN-System zu bestimmen.

Bei dem erfindungsgemäßen Verfahren kann als Probesignal in vorteilhafter Weise ein einzelnes Zufallszahlenfolgesignal verwendet werden, wie es in dem Buch von Tietze/Schenk, "Halbleiter-Schaltungstechnik" 1980, Seiten 509 bis 512 angegeben ist. Als besonders vorteilhaft wird es jedoch im Hinblick auf eine nicht erforderliche Phasensynchronisation angesehen, wenn ein periodisiertes Zufallszahlenfolgesignal als Probesignal verwendet wird, insbesondere eine $2^{n}$-m-Sequenz.

Bei dem erfindungsgemäßen Verfahren können neben der Übertragungsfunktion der zu untersuchenden elektrischen Leitung auch die zu erwartenden Bitfehler ermittelt werden, wenn in vorteilhafter Weise

g) das Empfangssignal über einen Komparator mit Abtasteinrichtung und einen nachgeordneten binären Korrelator einer Einrichtung zur Maxima-Erfassung zugeführt wird und

h) das Ausgangssignal der Einrichtung zur Maxima-Erfassung einer Bitfehler-Anzeigeeinrichtung zugeführt wird.

Zur Erläuterung der Erfindung ist in

Fig. 1 ein Ausführungsbeispiel einer Anordnung zur Durchführung des erfindungsgemäßen Verfahrens in Form eines Blockschaltbildes und in

Fig. 2 ein zusätzliches Ausführungsbeispiel einer Anordnung zur Durchführung des erfindungsgemäßen Verfahrens in Form eines weiteren Blockschaltbildes dargestellt.

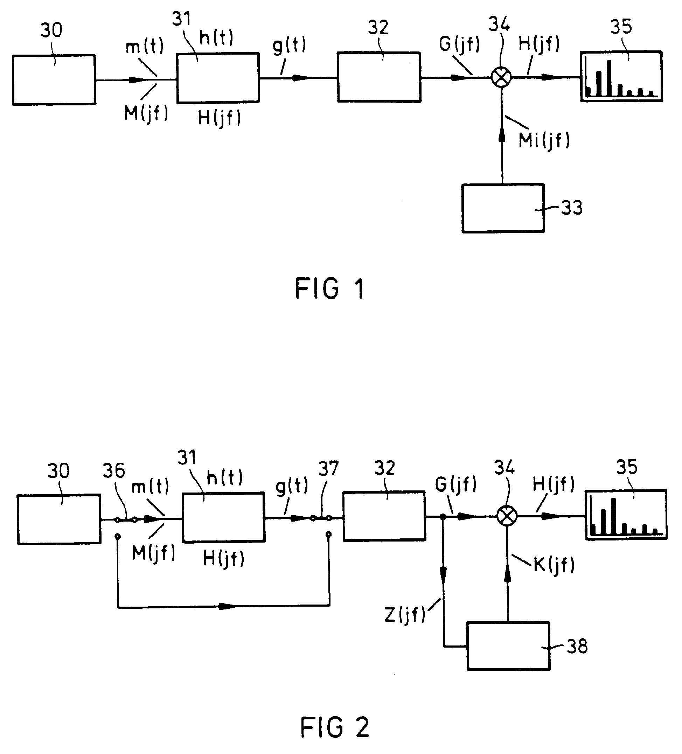

Bei dem Ausführungsbeispiel nach Fig. 1 wird ein Zufallszahlenfolgesignal m(t) als singuläres oder periodisiertes Signal, vorzugsweise eine $2^n$-m-Sequenz, von einem Generator 30 erzeugt. Am Ausgang der zu untersuchenden elektrischen Leistung 31 eines ISDN-Systems mit einer zunächst unbekannten Gewichtsfunktion h(t) ergibt sich ein Empfangssignal g(t). Dieses Empfangssignal g(t) wird in einer Einrichtung 32 für die Periode des Probesignals m(t) abgetastet und einer Fouriertransformation unterzogen. Dadurch ergibt sich am Ausgang der Einrichtung 32 ein aus dem Spektrum M(jf) des Generators 30 durch die Übertragungsfunktion H(jf) der Leitung 31 geformtes Spektrum G(jf):

$$G(jf) = H(jf) . M(if) \quad (1)$$

Wird dieses Spektrum G(jf) mit dem Spektrum Mi(jf) einer Periode des zeitinversen Probesignals mi(t) - erzeugt in einer Einrichtung 33 - in einem Multiplizierer 34 komplex multipliziert, dann stellt das Produkt die Übertragungsfunktion H(jf) im Spektrum dar, die in einer Einrichtung 35 anzeigbar ist.

Zur Kompensation von Nichtidealitäten, also den Abweichungen eines äquivalenten Probesignals M(jf) . Mi(jf) von einem idealen Probesignal P(jf), welches die Eigenschaften hätte, daß P(jf) = 1 ist, und den aufgrund der schaltungstechnischen Realisierung sich ergebenden Unterschieden zu dem mathematischen Ideal, dient das Ausführungsbeispiel nach Figur 2.

Bei diesem Ausführungsbeispiel, das im wesentlichen mit dem nach Figur 1 übereinstimmt und in dem daher gleiche Bausteine mit gleichen Bezugszeichen versehen sind, wird in einem ersten Verfahrensschritt die zu untersuchende elektrische Leitung 31 durch Betätigen zweier Schalter 36 und 37 aus der gezeigten Lage heraus kurzgeschlossen und am Ausgang der Einrichtung 32 das Spektrum Z(jf) ermittelt:

$$Z(jf) = N(jf) . M(jf) \quad (2)$$

In dieser Gleichung (2) beschreibt N(jf) die Übertragungsfunktion der Nichtidealitäten des Generators 30 und der Einrichtung 32 und wird als kompensiertes Spektrum K(jf)

$$K(jf) = Mi(jf) / N(jf) \quad (3)$$

in einer Einrichtung 38 zur Bildung des Referenzsignals abgelegt.

Wird in einem folgenden Verfahrensschritt der Kurzschluß der elektrischen Leitung 31 aufgehoben, dann wird das sich jeweils ergebende Spektrum G(jf) in dem Multiplizierer 34 komplex mit K(jf) multipliziert und dadurch die Übertragungsfunktion H(jf) der elektrischen Leitung 31 - unbeeinflußt von Nichtidealitäten - gewonnen.

## Patentansprüche

1. Verfahren zum Ermitteln der Übertragungseigenschaften (H(jf)) einer elektrischen Leitung (2) in einem ISDN-System, bei dem

a) die Leitung (2) an einem Ende mit einem Probesignal (m(t)) beaufschlagt wird und

b) am anderen Ende der Leitung (2) das aufgrund des Probesignals (m(t)) entstandene Empfangssignal (g(t)) ausgewertet wird, indem es während eines der Periode des Probesignals (m(t)) entsprechenden Zeitintervalls abgetastet und einer Fouriertransformation unter Gewinnung eines Spektralsignals (G(jf)) unterworfen wird,

**dadurch gekennzeichnet,** daß

c) zum Ermitteln der Übertragungseigenschaften (H(jf)) einer elektrischen Leitung (2) in einem ISDN-System als Probesignal ein binäres, bipolares Zufallszahlenfolgesignal (m(t)) mit dem Crestfaktor Eins verwendet wird und daß

d) das Spektralsignal (G(jf)) mit einem Referenzspektrum (Mi(jf)) unter Gewinnung eines Ausgangssignals (H(jf)) komplex multipliziert wird, das ein Maß für die Übertragungseigenschaften der Leitung (2) darstellt, wobei das Referenzspektrum (Mi(jf)) aus dem zeitinversen Probesignal (mi(t)) gewonnen ist.

2. Verfahren nach Anspruch 1,
**dadurch gekennzeichnet**, daß
f) ein einzelnes Zufallszahlenfolgesignal (m(t)) als Probesignal verwendet wird.

3. Verfahren nach Anspruch 1,
**dadurch gekennzeichnet**, daß
g) ein periodisiertes Zufallszahlenfolgesignal (m(t)) als Probesignal verwendet wird.

4. Verfahren nach Anspruch 3,
**dadurch gekennzeichnet**, daß
h) das periodisierte Zufallszahlenfolgesignal (m(t)) eine $2^n$-m-Sequenz ist.

5. Verfahren nach Anspruch 3 oder 4,
**dadurch gekennzeichnet**, daß
j) bei einem Zufallzahlenfolgesignal (m(t)) mit einer von $2^n$ Bit abweichenden Länge eine Veränderung der Länge auf die nächstliegende, einer $2^n$ entsprechenden Länge vorgenommen wird.

6. Verfahren nach einem der vorangehenden Ansprüche,
**dadurch gekennzeichnet**, daß
k) Nichtidealitäten des Probesignals (m(t)) sowie bei der Erzeugung des Probesignals (m(t)) und bei der Fourier-Transformation auftretende Nichtidealitäten, die durch eine Multiplikation im Frequenzbereich mit einer komplexen Filterfunktion beschreibbar sind, bei der Erzeugung des Referenzspektrums (Mi(jf)) im Sinne einer Kompensation berücksichtigt werden.

## Claims

1. Method of determining the transmission properties (H(jf)) of an electrical line (2) in an ISDN system, in which
a) a test signal (m(t)) is applied to the line (2) at one end and
b) the received signal (g(t)) produced as a result of the test signal (m(t)) is evaluated at the other end of the line (2) by sampling it during a time interval corresponding to the period of the test signal (m(t)) and subjecting it to a Fourier transformation to obtain a spectral signal (G(jf)),
characterized in that
c) to determine the transmission properties (H(jf)) of an electrical line (2) in an ISDN system, the test signal used is a binary, bipolar random-number sequence signal (m(t)) having the crest factor of one and in that
d) the spectral signal (G(jf)) is subjected to complex multiplication by a reference spectrum (Mi(jf)) to obtain an output signal (H(jf)) which is a measure of the transmission properties of the line (2), the reference spectrum (Mi(jf)) being obtained from the time-inverse test signal (mi(t)).

2. Method according to Claim 1,
characterized in that
f) an individual random-number sequence signal (m(t)) is used as test signal.

3. Method according to Claim 1,
characterized in that
g) a periodized random-number sequence signal (m(t)) is used as test signal.

4. Method according to Claim 3,
characterized in that
h) the periodized random-number sequence signal (m(t)) is a $2^n$-m sequence.

5. Method according to Claim 3 or 4,
characterized in that
j) in the case of a random-number sequence signal (m(t)) having a length deviating from $2^n$ bits, the length is altered to the nearest length corresponding to a length of $2^n$.

6. Method according to one of the preceding claims,

characterized in that

k) non-ideal properties of the test signal (m(t)) and non-ideal properties which occur in generating the test signal (m(t)) and during the Fourier transformation and which can be described by a multiplication in the frequency range by a complex filter function are taken into account in the generation of the reference spectrum (Mi(jf)) for the purpose of compensation.

## Revendications

1. Procédé pour déterminer les caractéristiques de transmission (H(jf)) d'une ligne électrique (2) dans un système ISDN, selon lequel

a) on applique un signal de test (m(t)) à une extrémité de la ligne (2), et

b) à l'autre extrémité de la ligne (2), on évalue le signal de réception (g(t)) obtenu sur la base du signal de test (m(t)), en l'échantillonnant pendant un intervalle de temps correspondant à la période du signal de test ((m(t)) et en le soumettant à une transformation de Fourier, avec obtention d'un signal spectral (G(jf)),

caractérisé par le fait que

c) pour déterminer les caractéristiques de transmission (H(jf)) d'une ligne électrique (2) dans un système ISDN, on utilise, en tant que signal de test, un signal binaire bipolaire (m(t)) formé d'une suite de chiffres aléatoires, possédant le facteur de crête égal à un, et que

d) le signal spectral (G(jf)) est multiplié en mode complexe par un spectre de référence (Mi(jf)) moyennant l'obtention d'un signal de sortie (H(jf)), qui représente une mesure des caractéristiques de transmission de la ligne (2), le spectre de référence (mi(jf)) étant obtenu à partir du signal de test (mi(i)) inverse dans le temps.

2. Procédé suivant la revendication 1, caractérisé par le fait que

f) on utilise comme signal de test un signal unique (m(t)) formé d'une suite de chiffres aléatoires.

3. Procédé suivant la revendication 1, caractérisé par le fait que

g) comme signal de test on utilise un signal (m(t)) formé d'une suite de chiffres aléatoires, rendue périodique.

4. Procédé suivant la revendication 3, caractérisé par le fait que

h) le signal (m(t)) formé d'une suite de chiffres aléatoires, mis sous forme périodique, est une séquence $2^n$-m

5. Procédé suivant la revendication 3 ou 4, caractérisé par le fait que

j) pour un signal (m(t)) formé d'une suite de chiffres aléatoires et possédant une longueur, qui diffère de $2^n$ bits, on modifie la longueur pour obtenir la longueur immédiatement suivante correspondant à $2^n$.

6. Procédé suivant l'une des revendications précédentes, caractérisé par le fait que

k) on tient compte de caractéristiques non idéales du signal de test (m(t)) ainsi que de caractéristiques non idéales, qui apparaissent lors de la production du signal de test (m(t)) et lors de la transformation de Fourier et qui peuvent être décrites par une multiplication, dans la gamme des fréquences, avec une fonction de filtre complexe, lors de la production du spectre de référence (Mi(jf)), dans le sens d'une compensation.

FIG 1

FIG 2